# EUROPEAN PATENT APPLICATION

(11) **EP 0 547 644 A1**
(43) Date of publication of application: **23.06.1993**
(21) Application number: 92203059.8
(22) Date of filing: 06.10.1992
(51) Int. Cl.: B07B 13/00, B07B 15/00, B03B 9/06

(54) **Device for separating the components of garbage**

(30) Priority: 18.12.1991 NL 9102124
(71) Applicant: N.V. VUILAFVOER MAATSCHAPPIJ VAM, NL-1071 ZD Amsterdam (NL)
(72) Inventor: Esmeijer, Frederik Gerrit, NL-7327 CK Apeldoorn (NL); Snoek, Nicolaas, NL-2021 AE Haarlem (NL)
(74) Representative: Lips, Hendrik Jan George, Ir.

(57) **Abstract**

Device for separating the components of garbage (3), which device comprises a conveyor (1) with a conveying plane (2) running obliquely upward which is moved at a speed of 4 to 10 m/sec. and is directed towards an impact member (5) being arranged at some distance from the end of the conveying plane, said impact member being constituted by a rotatably driven impact roller (5). Scrapers (7) cooperate with the roller for cleaning the roller (5). Underneath and at some distance from the impact roller (5), at least one rotatably driven auxiliary roller (9) has been mounted, and has been arranged such that, seen in plan view, a part of the surface (8) of this auxiliary roller (9) is nearer to the conveyor (1) than the impact roller (5). The rotational direction of the impact roller (5) and the auxiliary roller (9) is such, that their uppermost point moves away from the conveyor (1).

## Description

The invention relates to a device for separating the components of garbage, which device comprises a conveyor with a conveying plane running obliquely upward and being moved at a speed of 4 to 10 m/sec. and being directed at an impact member being arranged at some distance from the end of the conveying plane.

In a known device, this bouncing member is constituted by a plate. From the conveyor, the garbage brought thereon is thrown against the impact plate. Relatively hard components will be rebounded by the impact plate. The impact plate has been arranged such that these rebounded hard components move underneath the conveyor and can be collected there. However, relatively soft components will fall down from the impact plate almost vertically and can thereby be collected separately from the hard components.

Herein, the difficulty arises, that parts of the garbage will deposit on the impact plate, as a result of which after some time this plate will not be able to perform its function any longer.

The invention now seeks to remove this difficulty and to that end provides for, that the impact member is constituted by a rotatably driven impact roller, at which scrapers for continuously cleaning the roller have been provided, and at least one rotatably driven auxiliary roller mounted at some distance from the impact roller, which auxiliary roller has been arranged such that, seen in plan view, a part of the surface of this auxiliary roller is nearer to the conveyor than the impact roller, the rotational directions of the impact roller and the auxiliary roller being such that their uppermost portion moves away from the conveyor.

Through this, it can be achieved, that relatively soft components falling down from the impact roller will fall, at least partially, on to the auxiliary roller and by this roller are discharged to the side opposite the one the relatively hard components rebounded by the impact roller move to. Further, when the relatively hard components are not completely rebounded in the right direction from the impact roller, these hard components will end up on the auxiliary roller and be rebounded by it. This reduces the possibility that hard components are discharged together with the separated soft components.

The proces described can be repeated by mounting a second auxiliary roller underneath, and again somewhat offset in relation to the first auxiliary roller in the same direction as the first auxiliary roller.

Where in the above, relatively hard components are mentioned, these are understood to be for example glass and metal and relatively soft components include for example hard and soft plastics, soft drink cartons, plastic foil and the like.

Although with this device it is possible to obtain a proper separation of relatively hard and soft components in a few steps, in most cases it is desirable to realise a further separation, in particular as regards to the relatively soft components.

It has appeared that this can be established by mounting an air exhaust conduit between the first auxiliary roller and the second auxiliary roller situated beneath it, with the inlet opening of said conduit being directed towards the conveyor, extending across the length of the roller and, seen in vertical direction, beginning right under the first auxiliary roller and ending at some distance from the second auxiliary roller situated under it.

Thus, in this way, an exhaust slot is formed through which certain components, such as for example plastic foil and similar very light components, can be exhausted. Other relatively soft components, such as for example soft drink cartons, will not be exhausted, but will fall on to the second auxiliary roller situated under the inlet opening, and be discharged by this roller.

The invention also relates to a method for application with the device described above, which method is characterized in that the garbage is thrown against an impact roller at a speed between 4 and 10 m/sec., for separating the relatively hard and soft components, because the hard components are rebounded more than the soft components, in which at least a portion of the soft components is discharged by an auxiliary roller situated under the impact roller and the remaining mixture of hard and soft components, which has fallen down from the impact roller almost vertically, is subjected to a subsequent separating operation by the auxiliary roller, in which the relatively soft components move towards a second auxiliary roller and the lightest components are exhausted through a suction opening situated at a distance above the second auxiliary roller and almost connecting to the first auxiliary roller.

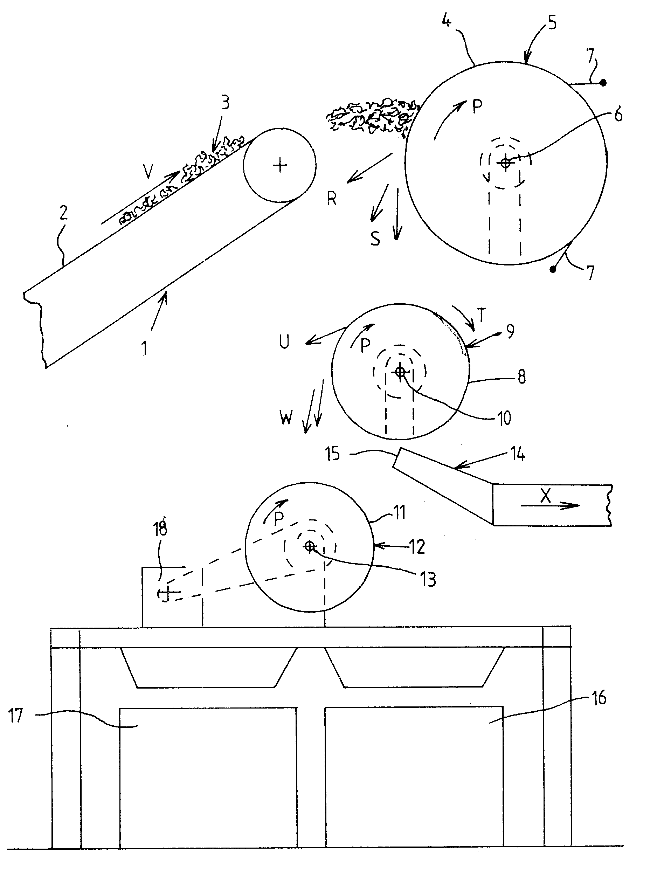

The invention is further explained by means of an embodiment of a device according to the invention, which device has been illustrated diagrammatically in side elevation in the accompanying drawing.

The device comprises the conveyor 1 as in the form of a conveyor belt, the transporting plane 2 of which moves obliquely upward in the direction of the arrow V at a speed between 4 and 10 m/sec.

Garbage 3 is dumped on to the conveyor 1, which the conveyor throws against the surface 4 of an impact roller 5 with a certain force. The impact roller 5 is rotatably supported by means of the shaft 6 and is rotated in the direction of the arrow P in a way to be described further. Some scrapers 7 act on the surface 4 to remove garbage which has deposited on the impact roller 5.

The major part of the hard components, which are in the garbage 3, will rebound from the roller 5 in the direction of the arrow R. A mixture of substantially relatively soft components, in which, however, there can still be hard components that have not directly come loose of the soft components, will fall down in the direction of the arrow S and end up on the surface 8 of a first auxiliary roller 9, which is supported by the shaft 10 and is likewise rotated in the direction of the arrow P.

Part of the relatively soft components falling down will be dragged along by the roller 9 and be discharged in the direction of the arrow T. The remainder of the mixture falling down is subjected to a second separating operation by the roller 9. Relatively hard components will rebound from the roller 9 in the direction of the arrow U and the relatively soft components will fall down in the direction of the arrow W and land on the surface 11 of the second auxiliary roller 12, which is supported by the shaft 13 and is again rotated in the direction of the arrow P.

Between both auxiliary rollers 9 and 12, an air exhaust conduit 14 has been mounted, the inlet opening 15 of which being situated directly beneath the auxiliary roller 9 and ending at some distance above the auxiliary roller 12.

Through the inlet opening 15, the relatively soft components, which can also be light and thus for example voluminous, such as plastic foils, can be sucked away from the mixture falling down. The relatively soft, yet relatively heavier components, such as for example soft drink cartons, will not be sucked away, but end up on the auxiliary roller 12 and thereby be discharged into the container 16. The separated relatively heavy components will end up in the container 17.

The components ended up in the air exhaust conduit 14 are discharged in the direction of the arrow X and be removed from the air stream such as, for example, by means of a cyclone not illustrated.

The way of supporting the shafts 6, 10 and 13 of the rollers 5, 9 and 12 is only indicated diagrammatically and needs no further explanation. Driving each of the rollers 5, 9 and 12 kan take place with the help of a motor with adjustable speed, so that certain hard or soft components can be selectively separated. Only the motor 18 for the lowermost roller 12 has been diagrammatically illustrated in the drawing. The motor can be provided with a chain wheel across which a chain runs that cooperates with a chain wheel mounted on the shaft 13 of the roller 12. The other rollers 5 and 9 can be driven by an individual motor with adjustable speed in a corresponding way. Through this, the speed of each motor can be chosen such that the velocity of the surfaces 4, 8 and 11 of the rollers 5, 9 and 12 respectively, meets certain requirements for a best possible separation of the garbage components.

It should be stated, that the shape and arrangement of the air exhaust conduit 14 will be such, that the downward fall of the garbage components from the rollers 5 and 9 into the containers 16 and 17 is hindered as little as possible.

It will be obvious, that only one possible embodiment of a device according to the invention has been illustrated in the drawing and described above, and that many modifications can be made without falling beyond the inventive idea.

## Claims

1. Device for separating the components of garbage (3), which device comprises a conveyor (1) with a conveying plane (2) running obliquely upward and being moved at a speed of 4 to 10 m/sec. and being directed at an impact member (5) being arranged at some distance from the end of the conveying plane, characterized in that the impact member is constituted by a rotatably driven impact roller (5), at which scrapers (7) for continuously cleaning the roller (5) have been provided, and at least one rotatably driven auxiliary roller (9) mounted at some distance from the impact roller (5), which auxiliary roller has been arranged such that, seen in plan view, a part of the surface (8) of this auxiliary roller (9) is nearer to the conveyor (1) than the impact roller (5), the rotational directions of the impact roller (5) and the auxiliary roller (9) being such that their uppermost portion moves away from the conveyor (1).

2. Device according to claim 1, characterized in that a second auxiliary roller (12) has been mounted under and again somewhat offset in relation to the first auxiliary roller (9) in the same direction as the first auxiliary roller.

3. Device according to claim 1 or 2, characterized in that an air exhaust conduit (14) has been mounted between the first auxiliary roller (9) and the second auxiliary roller (12) situated beneath it, with the inlet opening (15) of said conduit being directed towards the conveyor (1), extending across the length of the roller (9) and, seen in vertical direction, beginning right under the first auxiliary roller (9) and ending at some distance from the roller (12) situated under it.

4. Device according to one of the preceding claims, characterized in that each roller (5, 9, 12) is driven by a corresponding motor (18) with adjustable speed.

5. Method for applying the device according to one or more of the preceding claims, characterized in that the garbage (3) is thrown against an impact roller (5) at a speed between 4 and 10 m/sec., for separating the relatively hard and soft components, because the hard components are rebounded more than the soft components, in which at least a portion of the soft components is discharged by an auxiliary roller (9) situated under the impact roller (5) and the remaining mixture of hard and soft components, which has fallen down from the impact roller (5) almost vertically, is subjected to a subsequent separating operation by the auxiliary roller (9), in which the relatively soft components move towards a second auxiliary roller (12) and the lightest components are exhausted through a suction opening (15) situated at a distance above the second auxiliary roller (12) and almost connecting to the first auxiliary roller (9).
